(19) Europäisches Patentamt
European Patent Office
Office européen des brevets

(11) EP 1 236 748 A1

(12) EUROPEAN PATENT APPLICATION

(43) Date of publication:
**04.09.2002 Bulletin 2002/36**

(51) Int Cl.⁷: **C08F 251/00**

(21) Application number: **01810188.1**

(22) Date of filing: **22.02.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ECOLE POLYTECHNIQUE FEDERALE DE LAUSANNE**
**1015 Lausanne (CH)**

(72) Inventors:
- **Laue, Carsten**
**1003 Lausanne (CH)**
- **Hunkeler, David**
**1025 Saint-Sulpice (CH)**

(74) Representative: **Ganguillet, Cyril et al**
**ABREMA**
**Agence Brevets & Marques**
**Ganguillet & Humphrey**
**Avenue du Théâtre 16**
**Case postale 2065**
**1002 Lausanne (CH)**

(54) **Polymer flocculents and preparation thereof**

(57) A high molecular weight water soluble graft copolymer having improved flocculating properties is provided. The backbone chain is a heteropolysaccharide comprising amino groups, in particular chitosan, grafted with one or more monoethylenically unsaturated monomers.

The polymer is useful in solid/liquid separations such as flocculents and coagulants in processes utilizing water treatment, and as thickening agents.

EP 1 236 748 A1

## Description

The present invention relates to water soluble graft copolymers of a polymer backbone chain with branch chains grafted thereto, their method of preparation and their use as flocculents.

Water-soluble polymers are often used in process industries for solid liquid separation either as integral part of the production chain or just prior to environmental release. They are also useful for water treatment, such as sludge dewatering and water clarification. Domestic and industrial sewage contains suspended matter, which must be removed. These suspended particles are predominantly stabilized due to their negative net surface charge. The processes of coagulation and flocculation are employed to separate suspended solids form water whenever their natural subsidence rates are too slow to provide effective clarification.

To achieve clarified water with low turbidities inexpensive inorganic coagulants, on a per kilogram basis, such as ferric chloride, ferric sulfate, aluminum sulfate, polyaluminum chloride and sodium aluminate are used. These products are effective but have the drawback of increasing the volume of precipitated matter, and often being costly on a per cubic meter of water base.

Effective polymeric flocculents are usually water soluble, organic linear macromolecules, often of high molecular weight. They may be nonionic, anionic or cationic in character. In municipal water treatment, synthetic polymers are used almost exclusively whereas in pulp and paper industries the consumption of natural polymers such as gelatin, starch and alginates is nearly twice that of synthetic polymers (Concise Encyclopedia of Polymer Science and Engineering, J.I Kroschwitz, Ed, John Wiley & Sons, New York, USA 1990, page 409).

Assuming similar quality of the wastewater, which implies similarity in suspended particle concentration, the addition of a flocculent yields different results corresponding to the added amount of polymer. If the added amount of flocculent is too small, no flocculation effect can be observed. At higher flocculent amounts, beyond an "lower limit concentration" the flocculation process is effective. Is the flocculent concentration further increased, beyond an "upper limit concentration" restabilization of the suspended particles can occur. The efficiency of a polymeric flocculent is, therefore, limited to a certain concentration, which itself depends on the concentration of the suspended particles in the wastewater. However, the concentration of the suspended particles in wastewater can vary severely with time during the day, seasonally and between facilities and the dosage of the flocculent needs to be adjusted to yield effective flocculation. Often the concentration of the suspended particles is not continuously measured since the measurement can be expensive. A flocculent, which is effective over a broad range of particle concentration, would avoid the adjustment of the dosage or/and measurement of the particle concentration. Furthermore, the dosage of a flocculent with these properties does not need to be varied in a broad manner and avoids the use of expensive dosage equipment.

Branched polymer structures have shown increased flocculation efficiency and various strategies have been attempted to achieve branching. The use of a crosslinking agent and grafting of preformed polymers have been reported.

U.S. Pat.No 5,945,494 discloses a crosslinked polymeric high molecular weight flocculent. The use of a crosslinking agent together with a chain transfer agent is noted, both of which need to be added to reaction mixture in precise proportions. Otherwise non-soluble copolymer products or low viscosity products with deteriorate flocculation properties are obtained.

U.S. Pat.No. 4,271,053 teaches the preparation and use of a graft copolymer consisting of poly(N-glycidylpiperazine), formed by the reaction of piperazine and epichlorihydrin, as polymer backbone, which is subsequently partially quarternized and then grafted in a condensation reaction with 1,3-bis(dimethylamino)-2-propanol and 1,4-dichloro-2-butene. The resulting product was tested as flocculent for mine ore slurry. The turbidity of the supernatant was measured at a fixed polymer dosage. Compared to the ungrafted quarternized backbone and various ungrafted side chain polymers the invented material showed improved flocculation properties.

Grafting of starch with side chains of acrylamide and acrylic acid is disclosed in U.S. Pat.No. 4,400,496 (1983). The product was deemed suitable for enhanced oil recovery. However, it does not provide cationic charges, which allow the flocculation of negatively stabilized suspended matter.

EP 0 356241 discloses the process of grafting acrylamide or anionic monomers onto starch in the presence of ceric ions. The product is a neutral or anionic graft copolymer and showed effective viscosifying properties.

The use of natural cationic polymers such as chitosan or cationic starch in combination with clay for water treatment is disclosed in U.S. Pat.No. 5,543,056. This process depressed the pH only slightly avoiding additional doses of pH adjustment chemicals. The comparative alum addition resulted in a pH reduction of 1 unit requiring pH adjustment. The turbidities of the supernatant were comparable to alum alone and alum/PDADMAC combinations.

U.S. Pat.No. 5,789,488 and EP 0 741110 teach the preparation of a water-soluble graft copolymer consisting of a poly (vinyl alcohol) backbone polymerized with 2-methacroyloxyethyltrimethylammonium chloride in the presence of ceric ammonium nitrate. The products were as effective in wastewater clarification as conventional products.

U.S. Pat.No. 5,879,564 describes the synthesis of branched high molecular weight cationic acrylamide based polymeric flocculent. To achieve branching the addition of a crosslinking agent is required. The drainage volume of

flocculated sludge was improved with this polymeric flocculent. The reaction is initiated by the use of highly toxic sulfuric dioxide gas. Essential in this process is the use of a chain-transfer agent in order to regulate the polymer structure.

Although conventional polymeric flocculents are often effective in their specific applications new polymers with improved clarification properties, specifically robust materials are required, which function over a broad range of water quality conditions and polymer concentrations in order to lower costs and avoid inefficient use of high value material.

The aim of the present invention is to provide novel polymeric flocculents, which facilitate the application of the flocculation procedures. The invention provides a water-soluble graft copolymer of a polymer backbone chain with branch chains grafted thereto, wherein said backbone chain is a heteropolysaccharide comprising amino groups grafted with one or more monoethylenically unsaturated monomers. More specifically this invention provides copolymers of chitosan grafted with monoethylenically unsaturated monomers.

The monomers used for the preparation of the polymeric material of this invention are monoethylenically unsaturated monomers. The monomers can be allyl monomers, but are generally vinyl, preferably acrylic monomers. The monomers may be non ionic, cationic or anionic.

The invention provides too a water-soluble graft copolymer comprising a backbone molecule of chitosan with branch chains grafted thereto of copolymerized two or more acrylic monomers.

In one aspect of the invention, the polymer of this invention is a synthetic/natural hybrid material. It may comprise a nonionic monomer and one or more charged monomers.

Suitable acrylic monomers for preparing the copolymer of this invention include, but are not limited to, acrylamide, methacrylamide, N-vinyl methyl acetamide, N-vinyl methyl formamide, dialkylaminoalkylmethacrylamide, sulphomethylated acrylamide, vinyl acetate, vinyl pyrrolidone, methacrylic esters, styrene, acrylonitrile, acrylic acid, methacrylic acid, itaconic acid, acrylamido methyl propane sulphonic acid, allylsulphonate, sodium vinyl sulphonate, sodium acrylate, diallyldimethylammonium chloride, methacrylamidopropyl trimethylammonium chloride, dialkylaminoalkyl methacrylate, dialkylaminoalkyl acrylate, dialkylaminoalkyl acrylate methyl chloride, and quaternaries or acid salts thereof. At least one of the above monomers is used. Two or more of the above monomers may be copolymerized. Three or more of the monomers can also be simultaneously reacted.

In another aspect of this invention the hybrid material is used as a flocculent for treating an aqueous suspension such as residential or industrial wastewater. Accordingly, a process for flocculating an aqueous suspension of suspended solids is provided comprising adding to the suspension a flocculating amount of the polymer of this invention, such that an aqueous medium containing flocculated suspended solids is formed. The flocculated suspended solids are then separated from the aqueous medium in a conventional dewatering step, e.g., centrifuge, piston press, or belt press dewatering. Typically the flocculating amount, i.e., the effective dosage, of the flocculent material of this invention ranges from about 1 to about $10^5$ ppm. The optimal dosage can vary, depending on the solid suspension to be flocculated and the properties of a particular polyacrylamide used. Preferably from about 10 to about 100 ppm of the copolymer of this invention is used.

This invention also provides a process of preparing these copolymers by reacting one or more acrylic monomers and a heteropolysaccharide comprising amino groups, in particular chitosan, one or both of which dissolved in deoxygenated aqueous solvents.

Examples of non-ionic monomers include, but are not limited to, acrylamide, methacrylamide, N-vinylmethylacetamide, N-vinyl methyl formamide, vinyl acetate, vinyl pyrrolidone, methyl methacrylate, other acrylic or ethylenically unsaturated esters, styrene, and acrylonitrile.

Examples of cationic monomers are dialkylaminoalkylacrylates and methacrylates, especially dialkylamino ethyl acrylate, and their quaternary or acid salts, and dialkylaminoalkylacrylamides or methacrylamides and their quaternary or acid salts, such as quarternized dialkylaminoethylacrylamides. Alkyl groups are generally $C_{1-4}$.

Examples of anionic monomers include, e.g., acrylic acid, methacrylic acid sodium acrylate, methacrylate, itaconate, 2-acrylamide 2-methyl propane sulphonate, sulphopropylacrylate or methacrylate or other forms of these carboxylic or sulphonic acids.

One or more of the above monomers may be used in the process for preparing the polymer of this invention. A preferred cationic monomer reaction mixture may contain acrylamide and dialkylaminoalkyl(meth)acrylate (as acid salt or quaternary salt). A preferred cationic monomer reaction mixture may contain acrylamide and dialkylaminoalkyl (meth)acrylate (as acid salt or quaternary salt) in a concentration of 80 to 10 wt% of the cationic monomer, preferably 50 to 20 wt%. A preferred anionic monomer system can include acrylamide and acrylic acid or methacrylic acid as comonomers.

Chitosan is generally obtained from natural chitin after N-deacetylation by an alkaline treatment. It is a heteropolysaccharide comprising amino groups, composed mainly of β-(1,4)-2-deoxy-2-amino-D-glucopyranose units, and partially of β-(1,4)-2-deoxy-2-acetamido-D-glucopyranose. The various samples thus prepared are characterized by their fraction of 2-acetylamino-D-glucose units in the molecule, varying approximately from $y = 0.3$ to 0 and $x = 1$ to 0.7 with $x + y = 1$ for the water-soluble forms. Formula 1 shows the Molecular Structure of Chitosan.

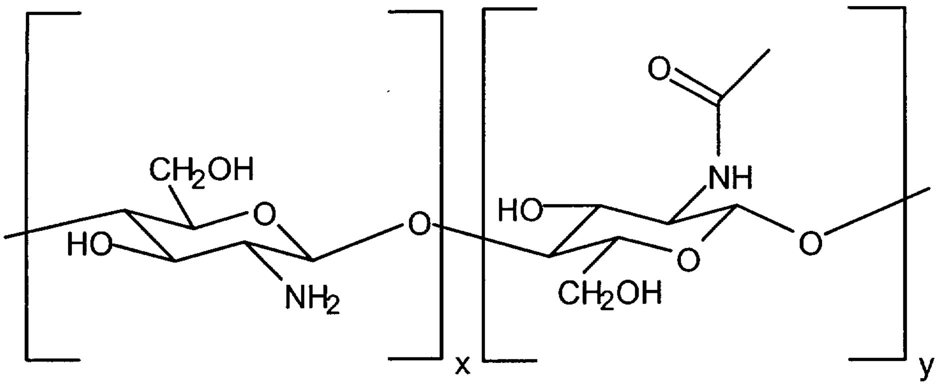

(1)

A preferred polymerization procedure is a solution polymerization process. In another embodiment of the invention the graft copolymer can be prepared in an inverse emulsion polymerization process. Other processes, including solution-gel polymerization and precipitation polymerization, can also be used for the preparation of the polymer of the present invention, as will be apparent to a skilled artisan.

The preparation of the graft copolymer is conducted under oxygen-free conditions by dissolving chitosan in a buffered solvent of pH 1-7, preferably 3-6. One or more than one type of monomers are added followed by the addition of a polymerization initiator and allowing time for graft copolymerization to occur.

The preferred polymerization initiator is cerium $Ce^{4+}$ dissolved in water or a buffer system provided by the dissolution of cerium (IV) ammonium nitrate $Ce(NH_4)_2(NO_3)_6$ to give a 0.0001 to 0.1 molar aqueous solution. Also other cerium containing molecules which possess oxidation potential, such as cerium (IV) ammonium sulfate and cerium (IV) sulfate can be used.

The buffered solvent comprises preferably acetic acid and one or more salts of acetic acid. The molar percentage of acetic acid to acetate salt is from 1:99 to 100:0. The invention is not limited to the use of acetic acid buffers or buffer systems in general. The preparation of the solvent of pH 1-7 can include, but is not limited to, hydrochloric acid, hydrobromic acid, phosphoric acid, phosphorous acid, nitric acid, nitrous acid, perchloric acid, perbromic acid sulfuric acid, formic acid, propionic acid and their salts. The choice of acid to adjust the pH is within the scope of someone skilled in the art.

The polymerization can also be carried out in an inverse emulsion polymerization. A water-in-oil emulsion, is another possible medium for preparing the polymer of this invention.

In an inverse emulsion polymerization process, the resultant inverse polymer emulsion contains a dispersed aqueous phase having the polymer of this invention, and a continuous oil phase formed of a water-immiscible inert organic liquid. In these inverse emulsions, the aqueous phase comprises from about 60 to about 95, preferably from 70 to 80, weight percent of the total emulsion weight. In addition to water, the aqueous phase also contains the monomers to be polymerized in preferred amounts of from about 40 to 60 weight percent based on the total weight of the emulsion.

The oil phase can be any inert aliphatic and/or aromatic hydrophobic liquid which does not interfere with the polymerization reaction. Examples of these hydrophobic liquids can be benzene, xylene, toluene, mineral oils, isoparaffinic oils, kerosenes, naphtas, and the like, and mixtures thereof. Preferably, the oil phase comprises about 15 to 30 % of the emulsion.

The oil phase can also contain water-in-oil surfactants. Such surfactants are well known in the art and are used to promote the formation and stabilization of water-in-oil emulsions. Typically, the surfactants or stabilizers have HLB values in the range of from about 2 to about 10, preferably less than about 7. Examples of these surfactants or stabilizers include, but are not limited to, sorbitan esters of fatty acid, alkanolamides, fatty acid glycerides, glycerine esters, as well as ethoxylated versions of the above and any other well known emulsifers. The water-in-oil surfactants should be used in amounts not greater than about 5 weight percent of the total emulsion. Preferably the amount is not greater than 3 %, and most preferably less than about 2,5 %.

The chitosan graft copolymer material of this invention is particularly useful for flocculating an aqueous suspension of suspended solids. The polymer can be used in wastewater treatment, e.g., municipal, farm, and industrial wastewater. In addition, the polymer can also be used in industrial manufacturing, e.g., treating liquid suspensions to remove solids for purposes of e.g., modifying the color, taste, or viscosity of the aqueous suspension. Conventional flocculating methods known in the art can be used for this purpose. Typically, a flocculating process may include the steps of adding to the suspension a flocculating amount of a flocculent material according to this invention to form an

aqueous medium containing flocculated suspended solids. The flocculating amount, i.e., the effective dosage, of the flocculent material of this invention may range from about 1 to about $10^5$ ppm, preferably from 4 to about $10^4$ ppm, more preferably from about 5 to about 1000 ppm, and most preferably from about 10 to about 500 ppm.

The chitosan graft copolymer material may be used after the polymerization process without further purification. In particular, the solution resulting from the solution polymerization process, or the inverse emulsion resulting from the inverse emulsion polymerization process as described above may be used as a flocculent material in liquid condition. Optionally, the inverse emulsion comprising the chitosan graft copolymer may be treated by an emulsion breaker before use as flocculent.

The polymers of the present invention are also useful as retention agents, in paper manufacturing. They can be added to the paper finish at the wet end of the paper machine in typical amounts such as about 0.05 to about 7 kilograms of active material per ton of finished paper.

Nuclear magnetic resonance (NMR) can be used to measure the strength of polymer adsorption. This was shown by van der Beek, Cohen-Stuart and Cosgrove (Polymer Adsorption and Desorption studies via $^1$H-NMR Relaxation of the Solvent, *Langmuir,* 7, pages 327-334 (1991)) as well as Cosgrove and Griffiths (Characterization of adsorbed polymer layers using NMR solvent diffusion studies, *Colloids and Surfaces A: Physicochemical and Engineering Aspects,* 84, pages 249-258 (1994)). It was demonstrated that the relaxation of the solvent is faster the stronger or the more segments of the polymer were bound to the surface of a suspended particle. The relaxation rate enhancement was molar mass independent. A measure of the stronger polymer particle interaction is the equivalent to the adsorption coefficient *b* of the Langmuir adsorption isotherm which represents the balance between adsorption and desorption of polymer segments. A higher value indicates that the adsorption of a polymer is stronger since adsorption rate constant is higher than the desorption rate constant.

The hybrid natural/synthetic graft-copolymers of the present invention have been the subject of NMR investigations. The materials prepared according to examples 1 and example 2 have been used to destabilize Kaolin suspensions and the water peak was recorded in an NMR spectra. The measure of relaxation times of water molecules allows to compare if a polymer binds stronger than another to the Kaolin surface. Therefore, two states of water, the bulk water surrounding the flocculated particles and adsorbed water molecules, have been investigated. These water molecules show different transverse relaxation times in proton-NMR experiments if they are bound to the Kaolin or free in solution. The transverse relaxation rate can be determined from the peak width of the water proton. For a free solvent molecule, nuclear spin relaxation times of the order of several seconds are usual. However, when the water molecule is entrained at an interface, and its molecular motion becomes anisotropic and also constrained, relaxation becomes very efficient and hence relaxation times become very short. It has been reported that this difference can used to evaluate the state of adsorption of polymers onto silica and conclusions about the amount of adsorbed polymers trains can be drawn. Adsorbed charged polymers such as the graft copolymers of the present invention and, for comparison, linear copolymers based on polyacrylamide have been examinated.

As will be apparent to a skilled artisan, the effective dosage of the polymer for flocculating a liquid suspension can vary with the concentration of the solids contained in the liquid suspension to be treated, the chemical and physical structure of the polymer flocculent, and the like. Typically, more polymer is needed when the liquid suspension has a higher concentration of solids, and vice versa. When the polymer concentration is not adapted with respect to the particle concentration insufficient flocculation, and a turbid supernatant, can be obtained.

When a polymer of this invention is used, flocculation is effective within lower and higher polymer concentration limits, referred to as relative window of application (RWA). The RWA can be calculated from the following equation:

$$RWA = \log (ULC) / \log (LLC)$$

where ULC is the upper limit concentration above which the polymer does no longer give sufficient clarification and LLC is the lower limit concentration below the flocculent does not yield sufficient clarification. These limits are passed, when the turbidity of the aliquot or supernatant exceeds 1% of the initial turbidity, where the initial turbidity refers to the turbidity value measured prior to flocculent addition. The turbidity has been determined quantitatively by the 90° diffraction of a 880 nm light beam by a CUS 41 A2 Optical Sensor from Endress & Hauser, Reinach BL, Switzerland.

The RWA for the polymer of this invention is much broader as compared to commercial polymeric flocculents. Some minor degree of experimentation may be required to determine the optimal dosage of a particular polymer of this invention for a particular liquid suspension to be treated, this being well within the capability of one skilled in the art once apprised of the present disclosure. In any event, the flocculating amount, i.e., the effective dosage typically falls within the ranges as described above.

Once an aqueous medium containing flocculated suspended solids is formed, it is dewatered by a conventional dewatering means, e.g., centrifuge, piston press, or belt press dewatering, or simply by allowing the solids to precipitate.

The polymers of the present invention are particularly useful in a dewatering process involving belt filter presses and centrifuges. The performance in such equipment can be manifested by increased solids contents in the filter cake and a reduction in turbidity in the filtrate (belt filter presses) and centrate (centrifuges). The conventional Buchner Funnel is used to test the relative effectiveness of various flocculents to dewater and clarify sludge. The test consists of obtaining a representative sludge sample, dividing it into aliquots, adding the desired amount of the polymer being tested, mixing the sludge with the polymer for 10 seconds at 400 rpm, pouring the conditioned sludge into the Buchner funnel with moist filter paper and then determining the drainage time to obtain a given volume or the filtrate volume after a given time. The best flocculents give the lowest times for a fixed volume or the highest volumes for a fixed time. The turbidity of the filtrate or the supernatant can be determined. The best flocculents provide the lowest turbidities of either supernatant or filtrate.

The following section summarizes exemplary preparation conditions and characteristics of the polymer flocculents of the present invention.

Example 1

This example describes the preparation of a graft copolymer. The polymer used as the backbone for the graft copolymerizations was chitosan of high molecular weight (Aldrich 41941-9, purchased as a solid). An amount of 0.98 g chitosan was dissolved in 200 mL 0.1 M acetic acid / 0.1 M sodium acetate buffer solution by agitation, then 5 g of 2-methacroyloxyethyl trimethyl ammonium chloride and 5 g acrylamide were added and the reactor was purged with nitrogen (99.995% $N_2$, Carbagas, Liebfeld, Switzerland) while the mixture was heated to 30°C. After 30 minutes stirring under $N_2$ the Ce(IV) initiator was added in form of 1 mL of a 0.59 molar ceric ammonium nitrate aqueous solution. Three hours of reaction at 30°C under $N_2$ followed the initiation. Opening the reactor, diluting the reaction mixture with water and cooling the reactor stopped the polymerization. The product was purified by hollow fiber ultrafiltration and freeze dried prior to use.

Example 2

This product was obtained by following the procedure of example 1, however changing the amount of chitosan to 0.30 g in 200 mL and the concentration of ceric ammonium nitrate solution to 0.19 molar.

Example 3

An amount of 0.98 g chitosan were dissolved in 200 mL 0.1 M acetic acid / 0.1 M sodium acetate buffer solution by agitation, then 2.5 g of 2-methacroyloxyethyl trimethyl ammonium chloride and 7.5 g acrylamide were added and the reactor was purged with nitrogen (99.995% $N_2$, Carbagas, Liebfeld, Switzerland) while the mixture was heated to 30°C. After 30 minutes stirring under $N_2$ the Ce(IV) initiator was added in form of 1 mL of a 0.59 molar ceric ammonium nitrate aqueous solution. Three hours of reaction at 30°C under $N_2$ followed the initiation. Opening the reactor, diluting the reaction mixture with water and cooling the reactor stopped the polymerization. The product was purified by hollow fiber ultrafiltration and freeze dried prior to use.

Comparative example 4

This product was obtained by following the procedure of example 1, however chitosan was replaced by glycosamine hydrochloride in 200 mL and the concentration of ceric ammonium nitrate solution to 0.59 molar.

Example 5

This example illustrates the formation of a branched 60:40 mol % acrylamide : dimethylaminoeethylacrylate methyl chloride quaternary salt chitosan based graft-copolymer in water-in-oil emulsion. To a vessel equipped with a mechanical stirrer were added 240 grams of Isopar M, 19.25 grams of sorbitan monooleate, and 5.75 grams of polyoxyethylene sorbitan trioleate as steric stabilizers. The mixture was then stirred rapidly at 300 RPM for five minutes to dissolve the surfactants. In a separate vessel also equipped with agitation means, the aqueous phase was prepared containing 144 grams of solid acrylamide, 320 grams of 80 wt % dimethylaminoethylacrylate methyl chloride quaternary salt, 0.72 g chitosan, and 240.92 grams of a 0.1 M acetic acid / 0.1 M sodium acetate buffer. The aqueous phase was stirred for 30 minutes at 250 RPM and then transferred slowly to the oil phase. The mixture was pre-emulsified at 300 RPM for five minutes and then emulsified in a homogenizer at 8000 RPM for 30 seconds. The resulting emulsion was then added to a one liter stainless steel reactor equipped with a mechanical stirrer, an inert gas sparge and an automatic temperature control device. The emulsion degased for one hour with a nitrogen flow rate of one liter per minute. Simultaneously, the temperature of the reaction was gradually increased up to 40oC from its starting temperature of

about 20°C (ambient conditions). Once the dissolved oxygen concentration decreased to below 0.2 ppm, 0.01 gram of 2,2-Azobis(4-methoxy-2,4-dimethylvaleronitrile), an organically soluble free radical initiator, dissolved in 2.25 grams of xylene, was added through a septum in the top of the reactor. Thirty minutes after the addition of the organically soluble free radical initiator, 0.492 g of cerium ammonium nitrate, dissolved in 4 mL of acetic acid/sodium acetate buffer was added. The reaction was maintained at 40°C for six hours. At the end of the six hours, the polymerization temperature was increased to 55°C.

Example 6

The relaxation rate enhancement coefficient has been determined for example 1, example 2, and example 4. Table I shows the intrinsic viscosity of the polymers and the chitosan content determined from infra red spectra together with the relaxation rate enhancement coefficient. The polymers containing chitosan have a higher relaxation rate coefficient indicating a stronger binding to the particle surface than the linear polymer of example 4.

Table I

| Chitosan Content, Intrinsic Viscosity (IV), Relaxation Rate Enhancement Coefficient of Kaolin Flocculation. | | | |
|---|---|---|---|
| Example | Chitosan Content [%] | IV [ml/g] | Relaxation Rate Enhancement Coefficient [g polymer/s] |
| 1 | 30 | 667 | 1.271 |
| 2 | 10 | 912 | 1.393 |
| 3 | 35 | 539 | - |
| 4 | 0 | 430 | 0.705 |

Example 7

The products of Example 1 and 3 have been tested as flocculents of anaerobic sludge. The experiments have been conducted with a sludge from the sewage plant in Orbe, Switzerland. As comparison the results of a commercial flocculent currently used at the wastewater treatment plant in Orbe, Switzerland are shown. Table II shows the turbidity measurement results of the comparison. An anaerobic sludge sample with 2.5% solids was employed. The polymer of this invention clearly outperforms the currently used flocculent for the anaerobic sludge flocculation as evidenced by lower turbidities at equivalent dosages and the breadth in polymer dosage at which low turbidities are observed.

Table II

| Turbidities of filtered sludge after the conventional Büchner funnel test of the polymer obtained in Example 1, Example 3 and Saron 4000 (Floerger SA, France) using an anaerobic sludge of the wastewater treatment plant of the city of Orbe, Switzerland. | | | | | |
|---|---|---|---|---|---|
| Polymer of Example 1 ppm | Residual Turbidit y in % of Initial Turbidit y | Polymer of Example 3 ppm | Residual Turbidit y in % of Initial Turbidit y | Saron 4000 Floerger SA, France | Residual Turbidit y in % of Initial Turbidit y |
| 4.3 | 3.1 | 4.5 | 3.0 | 4.5 | 3.3 |
| 9 | 1.7 | 9 | 1.9 | 9 | 2.2 |
| 17 | 0.8 | 18 | 1.0 | 18 | 1.4 |
| 43 | 0.3 | 45 | 0.3 | 45 | 0.7 |
| 86 | 0.2 | 91 | 0.2 | 89 | 0.5 |
| 172 | 0.3 | 181 | 0.1 | 178 | 1.4 |
| 345 | 1.1 | 362 | 1.0 | 356 | 1.7 |

Example 8

The products of examples 1 through 4 have been tested as flocculents of a Kaolin suspension of 5 g/L with 0.01 M NaCl. The graft copolymer of this invention outperforms the linear polymer of Example 4 in terms of width of

RWA (Table III).

Table III

| Relative window of application (RWA) obtained from the residual supernatant turbidity of kaolin and sludge 15 minutes after flocculent addition. | | |
|---|---|---|
| Polymer | RWA of kaolin flocculation | RWA of sludge flocculation |
| Example 1 | 1.36 | 1.30 |
| Example 2 | 0.98 | - |
| Example 3 | 2.36 | 1.30 |
| Example 4 | 0.85 | - |
| Saron 4000 Floerger SA, France | 0.7 | 0.68 |

**Claims**

1. A water-soluble graft copolymer of a polymer backbone chain with branch chains grafted thereto, **characterized in that** said backbone chain is a heteropolysaccharide comprising amino groups, grafted with one or more monoethylenically unsaturated monomers.

2. The copolymer of claim 1, wherein the heteropolysaccharide is chitosan.

3. The copolymer of claim 1 or 2, **characterized in that** said unsaturated monomer is a vinyl, in particular an acrylic monomer.

4. The copolymer of claims 1-3, **characterized in that** it comprises a non ionic monomer and one or more charged monomers.

5. The copolymer of claims 1-4, wherein said one or more monomers are selected from the group consisting of acrylamide, methacrylamide, N-vinyl methyl acetamide, N-vinyl methyl formamide, dialkylaminoalkylmethacrylamide, sulphomethylated acrylamide, vinyl acetate, vinyl pyrrolidone, methacrylic esters, styrene, acrylonitrile, methacrylic acid, itaconic acid, acrylamido methyl propane sulphonic acid, allylsulphonate, sodium vinyl sulphonate, sodium acrylate, diallyldimethylammonium chloride, methacrylamidepropyl trimethylammonium chloride, dialkylaminoalkyl methacrylate, dialkylaminoalkyl acrylate, dialkylaminoalkyl acrylate methyl chloride, and quaternaries or acid salts thereof.

6. The copolymer as claimed in claims 4-5 wherein said charged monomer is the cationic monomer 2-methacryloyloxyethyltrimethylammonium chloride.

7. A process for preparing a copolymer as claimed in any of claims 1-6, **characterized in that** the graft reaction is conducted under oxygen-free conditions.

8. The process of claim 7, wherein the reaction mixture is in a form of an aqueous solution.

9. The process of claim 7, wherein the reaction mixture is in a form of inverse-emulsion.

10. The process of any of claims 7-9, wherein the heteropolysaccharide is dissolved in a buffer solution which pH is less than 7, in particular is 3-6.

11. The process of any of claims 7-10, wherein the reaction is started with a cerium (IV) compound.

12. The process as claimed in claim 11 wherein said cerium compound is ceric ammonium nitrate.

13. The process of any of claims 7-12, wherein said heteropolysaccharide is grafted with an acrylamide monomer selected from the group consisting of acrylamide, methacrylamide, N-vinyl methyl acetamide, N-vinyl methyl formamide, dialkylaminoalkylmethacrylamide, sulphomethylated acrylamide.

**14.** The process of claim 13, wherein said reaction mixture further comprises a monomer selected from the group consisting of vinyl acetate, vinyl pyrrolidone, methacrylic esters, styrene, acrylonitrile, acrylic acid, methacrylic acid, itaconic acid, acrylamido methyl propane sulphonic acid, allylsulphonate, sodium vinyl sulphonate, sodium acrylate, diallyldimethylammonium chloride, methacrylamidepropyl trimethylammonium chloride, dialkylaminoalkyl methacrylate, dialkylaminoalkyl acrylate, dialkylaminoalkyl acrylate methyl chloride, and quaternaries or acid salts thereof.

**15.** The process of claim 13 or 14, wherein said one or more monomers include acrylamide and dimethylaminoethylacrylate, as acid salt or quaternary salt.

**16.** A process for preparing a water soluble acrylamide based graft-copolymer, as claimed in any of claims 9-15, comprising the steps of:

providing a polymerization reaction mixture in an inverse-emulsion comprising chitosan, acrylamide and dimethylaminoethylacrylate (as acid salt or quaternary salt) as polymerizable monomers, with at least 30 % by weight of the monomers being said dimethylaminoethylacrylate (as acid salt or quaternary salt); and

polymerizing said monomers while adding to the reaction mixture cerium ammonium nitrate as branching agent, at a total amount of from about 0.1 to 50 % per chitosan monomer units.

**17.** A water soluble acrylamide based graft copolymer prepared according to the process of Claim 16.

**18.** An inverse-emulsion comprising graft copolymer prepared according to the process of Claim 16.

**19.** Use of a copolymer as claimed in any of claims 1-7, 17, 18 as flocculent for treating an aqueous suspension of suspended solids.

**20.** Use as claimed in claim 16 for treating wastewater, wherein said copolymer is used in an amount of $1\text{-}10^5$ ppm, in particular 10-500 ppm.

**21.** Use of a copolymer as claimed in any of claims 1-7, 17, 18 as retention agent.

European Patent Office

# EUROPEAN SEARCH REPORT

Application Number
EP 01 81 0188

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 056 432 A (SLAGEL ROBERT CLAYTON ET AL) 1 November 1977 (1977-11-01)<br>* column 4, line 45 - line 50; examples 1-5 * | 1-5,7-14 | C08F251/00 |
| Y | BAILEY S E ET AL: "A review of potentially low-cost sorbents for heavy metals"<br>WATER RESEARCH,NL,ELSEVIER SCIENCE PUBLISHERS, AMSTERDAM,<br>vol. 33, no. 11, August 1999 (1999-08), pages 2469-2479, XP004170139<br>ISSN: 0043-1354<br>* page 2471 - page 2472 * | 1-21 | |
| Y | R.-S. JUANG C.-Y. JU: "Equilibrium sorption of Cu(II)-Ethylenediaminetetraacetic acid chelates onto cross-linked, polyaminated chitosan beads"<br>IND. ENG. CHEM. RES.,<br>vol. 36, 1997, pages 5403-5409, XP000999448<br>* page 5403 - page 5404 * | 1-21 | TECHNICAL FIELDS SEARCHED (Int.Cl.7)<br>C08F |
| A | D.T. WARNER L.L. COLEMAN: "Selective sulfonation of amino groups in amino alcohols"<br>J. ORG. CHEM.,<br>vol. 23, 1958, pages 1133-1135, XP001008031<br>* the whole document * | 1-21 | |

~~The present search report has been drawn up for all claims~~

| Place of search | Date of completion of the search | Examiner |
|---|---|---|
| MUNICH | 20 July 2001 | Rouault, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**LACK OF UNITY OF INVENTION SHEET B**

Application Number
EP 01 81 0188

The Search Division considers that the present European patent application does not comply with the requirements of unity of invention and relates to several inventions or groups of inventions, namely:

1. Claims: 5 (part), 1-4, 6-21

   A water soluble graft copolymer of a polymer backbone chain with branch chains, grafted thereto, characterized in that said backbone chain is chitosan, grafted with (meth)acrylamide and vinyl amide monomers.

2. Claims: 5 (part), 1-4, 6-21

   A water soluble graft copolymer of a polymer backbone chain with branch chains, grafted thereto, characterized in that said backbone chain is chitosan, grafted with vinyl acetate.

3. Claims: 5 (part), 1-4, 6-21

   A water soluble graft copolymer of a polymer backbone chain with branch chains, grafted thereto, characterized in that said backbone chain is chitosan, grafted with vinyl pyrrolidone.

4. Claims: 5 (part), 1-4, 6-21

   A water soluble graft copolymer of a polymer backbone chain with branch chains, grafted thereto, characterized in that said backbone chain is chitosan, grafted with methacrylic esters.

5. Claims: 5 (part), 1-4, 6-21

   A water soluble graft copolymer of a polymer backbone chain with branch chains, grafted thereto, characterized in that said backbone chain is chitosan, grafted with styrene.

6. Claims: 5 (part), 1-4, 6-21

   A water soluble graft copolymer of a polymer backbone chain with branch chains, grafted thereto, characterized in that said backbone chain is chitosan, grafted withunsaturated monomers containing carboxylic groups.

7. Claims: 5 (part), 1-4, 6-21

   A water soluble graft copolymer of a polymer backbone chain with branch chains, grafted thereto, characterized in that said backbone chain is chitosan, grafted with monomers containing sulfur.

8. Claims: 5 (part), 1-4, 6-21

   A water soluble graft copolymer of a polymer backbone chain with branch chains, grafted thereto, characterized in that

European Patent Office

## LACK OF UNITY OF INVENTION SHEET B

Application Number
EP 01 81 0188

The Search Division considers that the present European patent application does not comply with the requirements of unity of invention and relates to several inventions or groups of inventions, namely:

said backbone chain is chitosan, grafted with monomers containing ammonium chloride.

9. Claims: 5 (part), 1-4, 6-21

A water soluble graft copolymer of a polymer backbone chain with branch chains, grafted thereto, characterized in that said backbone chain is chitosan, grafted with aminoalkyl acrylate monomers.

1. All those inventions are linked by the following simple general concept : a water soluble graft copolymer of a polymer backbone chain with branch chains, grafted thereto, characterized in that said backbone chain is chitosan, grafted with one or more monoethylenically unsaturated acrylic monomers.

2. US-A-4056432 (examples 1-5) discloses a water soluble graft copolymer of a polymer backbone chain with branch chains, grafted thereto, characterized in that said backbone chain is chitosan, grafted with acrylamide or with acrylamide (non ionic) and acrylic acid (anionic). The choice of an acrylamide as monoethylenically unsaturated monomer is therefore not novel.

3. The graft copolymers cited in claim 5 are not linked by the single inventive concept that they are grafted with a monoethylenically unsaturated monomer. The choice of a different grafting monomer relates therefore to a different copolymer. The inventions are not linked by a single general inventive concept as required by article 82 EPC.

The present European patent application comprised at the time of filing more than ten claims. Only part of the claims fees have been paid within the prescribed time limit, namely for claims: 1-5(part),6-21
The present communication therefore does not take into account any claims other than those mentioned hereabove.

# ANNEX TO THE EUROPEAN SEARCH REPORT ON EUROPEAN PATENT APPLICATION NO. EP 01 81 0188

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2001

| Patent document cited in search report | | Publication date | Patent family member(s) | Publication date |
|---|---|---|---|---|
| US 4056432 | A | 01-11-1977 | NONE | |

EPO FORM P0459

For more details about this annex : see Official Journal of the European Patent Office, No. 12/82